# EUROPÄISCHE PATENTSCHRIFT

(11) **EP 3 399 352 B1**
(45) Veröffentlichungstag und Bekanntmachung des Hinweises auf die Patenterteilung: **05.07.2023**
(21) Anmeldenummer: 17169619.8
(22) Anmeldetag: 05.05.2017
(51) Int. Cl.: G01V 8/20

(54) **LICHTSCHRANKENANORDNUNG**
OPTICAL BARRIER DEVICE
SYSTÈME DE BARRIÈRE LUMINEUSE

(43) Veröffentlichungstag der Anmeldung: 07.11.2018
(73) Patentinhaber: Leuze electronic GmbH + Co. KG, 73277 Owen/Teck (DE)
(72) Erfinder: Feller, Bernhard, 86316 Friedberg (DE); Moll, Georg, 72655 Altdorf (DE); Debus, Oliver, 86842 Türkheim, Wertach (DE); Olbrich, Sebastian, 80992 München (DE); Hörderich, Johann, 82291 Mammendorf (DE)
(74) Vertreter: Ruckh, Rainer Gerhard

(56) Entgegenhaltungen:
- EP-A1- 2 192 423
- DE-A1- 10 253 511
- DE-A1-102009 012 906
- DE-A1-102010 048 941
- US-A- 5 218 196
- US-B1- 6 362 466

## Beschreibung

Die Erfindung betrifft eine Lichtschrankenanordnung gemäß dem Oberbegriff des Anspruchs 1.

Derartige Lichtschrankenanordnungen dienen generell zur Erfassung von Objekten in einem Überwachungsbereich. Die Lichtschrankenanordnung umfasst dabei eine Mehrfachanordnung von Lichtstrahlen emittierenden Sendern und eine Mehrfachanordnung von Lichtstrahlen empfangenden Empfängern. Vorteilhaft sind die Sender an einem Rand des Überwachungsbereichs und die Empfänger am gegenüberliegenden Rand des Überwachungsbereichs so angeordnet, dass jedem Sender ein Empfänger so zugeordnet ist, dass bei freiem Überwachungsbereich die von einem Sender emittierten Lichtstrahlen nur auf einen diesem zugeordneten Empfänger geführt sind. Dabei kann die Lichtschrankenanordnung generell auch als Lichtvorhang oder Lichtgitter, das heißt einem Lichtvorhang mit einer geringen Zahl von Sendern und Empfängern ausgebildet sein. Eine Detektion eines Objekts im Überwachungsbereich erfolgt generell dadurch, dass in der Steuer- und Auswerteeinheit der Lichtschrankenanordnung wenigstens eine Strahlunterbrechung der Lichtstrahlen eines Senders festgestellt wird.

Um Störeinflüsse wie Fremdlichteinflüsse zu minimieren, ist es bekannt, den Lichtstrahlen der Sender Kodierungen aufzuprägen, sodass diese Impulsfolgen ausbilden. Zur Elimination noch vorhandener Gleichspannungsanteile in den Empfangssignalen der Empfänger können den Empfängern Regler zugeordnet sein. Die damit durchgeführten Regelprozesse müssen jedoch die Signaldynamik der Empfangssignale beachten, was dazu führt, dass die Empfangssignale durch die Regelungen selbst beeinflusst werden und dadurch verfälscht werden.

Die US 5,218,196 A betrifft ein Photodetektionssystem in Form eines Lichtgitters. Das Lichtgitter umfasst eine Reihenanordnung von Lichtstrahlen emittierenden Sendern in einem ersten Gehäuse und eine Reihenanordnung von Lichtstrahlen empfangenden Empfängern in einem zweiten Gehäuse. Die Sender und Empfänger sind an gegenüberliegenden Rändern eines Überwachungsbereichs angeordnet. Bei freiem Überwachungsbereich treffen die Lichtstrahlen der Sender ungehindert auf einen zugeordneten Empfänger. Objekte im Überwachungsbereich werden durch Strahlunterbrechungen der Lichtstrahlen detektiert. Weiterhin sind Selbst-Korrekturmittel vorgesehen, mittels derer Driften von elektrischen Komponenten ausgeglichen werden können.

Die DE 10 2009 012 906 A1 betrifft eine optoelektronische Sensoranordnung mit einer Lichtsendeeinheit mit mehreren nebeneinander angeordneten Lichtsendem und einer Lichtempfangseinheit mit mehreren nebeneinander angeordneten Lichtempfängern, wobei jeweils ein Lichtsender und ein zugehöriger Lichtempfänger ein Lichtsender-/Lichtempfängerpaar bilden, und mit einer Lichtsendersteuerung sowie einer Lichtempfängersteuerung, wobei die Lichtsender und die Lichtempfänger zur Abgabe und zum hierzu synchronen Empfang von Lichtimpulsen jeweils einzeln, zeitlich nacheinander und zyklisch aktivierbar sind, wobei die Lichtsendersteuerung und die Lichtempfängersteuerung elektrisch voneinander entkoppelt sind und die Lichtsendersteuerung für jeden Zyklus zum Aussenden genau eines Lichtimpulses je Lichtsender ausgebildet ist, dadurch gekennzeichnet, dass die Lichtempfängersteuerung dazu ausgebildet ist, für wenigstens einen der Lichtempfänger einen erwarteten Zeitpunkt zu bestimmen, zu welchem der Lichtimpuls des zugehörigen Lichtsenders eingehen sollte, und den tatsächlichen Zeitpunkt des Empfangs des Lichtimpulses mit dem erwarteten Zeitpunkt des Empfangs des Lichtimpulses zu vergleichen.

Die Lichtempfängersteuerung kann eine Korrektur der zeitlichen Aktivierung der Lichtempfänger in Abhängigkeit der ermittelten Drift vornehmen.

Die US 6 362 466 B1 betrifft einen Sensor zur Obj ekterfassung mit einem Sender, der Licht aussendet, und einem Empfänger, der Licht empfängt. Der Sensor um fasst eine Kontrolleinheit zur automatischen Kontrolle der Amplituden von Empfangssignalen des Empfängers.

Die EP 2 192 423 A1 betrifft ein mehrstrahliges Reflexionslichtgitter mit einer Sender-Empfänger-Einheit. Das mehrstrahlige Reflexionslichtgitter weist eine Mehrzahl von Lichtsendern zum Aussenden von Licht in einen Überwachungsbereich und mindestens einen Empfänger zum Nachweisen von aus dem Überwachungsbereich kommendem Licht auf. Ein Reflektor ist zum Begrenzen des Überwachungsbereichs und zum Zurückstrahlen des Lichts der Lichtsender in Richtung des Empfängers oder der Empfänger gegenüberliegend zu der Sender-Empfänger-Einheit angeordnet. Eine Steuer- und Auswerteeinheit ist zum Abgeben eines Objektfeststellungssignals auf der Grundlage der von dem Empfänger oder den Empfängern nachgewiesenen Lichtintensitäten vorgesehen.

Der Erfindung liegt die Aufgabe zugrunde, eine Lichtschrankenanordnung der eingangs genannten Art bereitzustellen, mittels derer eine zuverlässige und störungssichere Objektdetektion ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Lichtschrankenanordnung zur Erfassung von Objekten in einem Überwachungsbereich mit einer Mehrfachanordnung von Lichtstrahlen emittierenden Sendern und Lichtstrahlen empfangenden Empfängern. Bei freiem Überwachungsbereich sind die von den Sendern emittierten Lichtstrahlen ungehindert auf diesen zugeordneten Empfänger geführt. Durch einen Objekteingriff im Überwachungsbereich sind die Lichtstrahlen wenigstens eines Senders zumindest teilweise unterbrochen. In einer Steuer- und Auswerteeinheit, wird in Abhängigkeit von Empfangssignalen der Empfänger ein Ojektfeststellungssignal generiert. Weiterhin ist eine Korrektureinheit vorgesehen, mittels derer zur Kompensation von Drifteffekten individuell für die einzelnen Empfänger und/oder diesen zugesendeten Bauteilen Korrekturwerte generiert sind. Die von den Sendern emittierten Lichtstrahlen enthalten Kodierungen. Mittels der Korrekturwerte sind Gleichspannungsanteile in den Empfangssignalen kompensiert und Dekodierungsgrößen korrigiert.

Die erfindungsgemäße Lichtschrankenanordnung kann dabei insbesondere als Lichtvorhang oder Lichtgitter ausgebildet sein.

Wesentlich bei der erfindungsgemäßen Lichtschrankenanordnung ist, dass nur eine Korrektureinheit für alle Empfänger oder eine Gruppe von Empfängern vorgesehen ist, um individuelle Korrekturwerte für die einzelnen Empfänger beziehungsweise deren zugeordnete Bauteile zu generieren. Die Korrektureinheit kann dabei in Form eines oder mehrerer Softwaremodule ausgebildet sein und insbesondere Bestandteil der Steuer- und Auswerteeinheit der Lichtschrankenanordnung sein. Die so ausgebildete Korrektureinheit kann somit ohne großen Aufwand kostengünstig realisiert werden.

Ein weiterer wesentlicher Aspekt der Erfindung besteht darin, dass mit der Korrektureinheit individuell der Betrieb der einzelnen Empfänger stabilisiert wird, indem die Korrektureinheit einzeln nacheinander den einzelnen Empfängern zugeschaltet wird.

Hier wird besonders vorteilhaft ausgenutzt, dass die Empfänger, insbesondere die einzelnen Sender-Empfängerpaare der Lichtschrankenanordnung beziehungsweise des Lichtvorhangs, zyklisch einzeln nacheinander aktiviert werden. Dann ist jedem Empfänger während der Zeit seiner Aktivierung die Korrektureinheit zugeordnet, sodass dann durch die mit der Korrektureinheit generierten Korrekturwerte individuell der Betrieb dieses Empfängers stabilisiert wird, indem eine geeignete Einstellung von Parametern des Empfängers beziehungsweise diesem zugeordneten Bauteilen erfolgt.

Wesentlich hierbei ist, dass die mit dem Korrekturwert durchgeführte Stabilisierung, insbesondere durchgeführte Regelvorgänge langsam erfolgen können, da mit den Korrekturwerten Drifteffekte von Bauteilen kompensiert werden. Diese Korrekturen bewirken somit keine unerwünschte Beeinträchtigung der Empfangssignale, wie dies bei schnellen Regelvorgängen der Fall wäre.

Besonders vorteilhaft ist mittels der Korrekturwerte eine Stabilisierung der Arbeitspunkte des jeweiligen Empfängers und/oder diesen zugeordneten Bauteilen bewirkt.

Die Arbeitspunkte der Bauteile und der Empfänger können sich bedingt durch Temperatur- und Alterungseinflüsse ändern. Durch die mit der Korrektureinheit erhaltenen Korrekturwerte können diese Drifteffekte kompensiert werden, sodass die Empfänger und deren zugeordnete Bauteile bei optimalen Arbeitspunkten betrieben werden. Vorteilhaft hierbei ist, dass damit keine separaten Bauelemente vorgesehen werden müssen, um den Betrieb des jeweiligen Empfängers und dessen zugeordneten Bauteilen zu stabilisieren, wodurch ein erheblicher Einsparungseffekt erzielt wird. Zur Einstellung der Arbeitspunkte der Empfänger oder Bauteile können beispielsweise deren Offsetspannungen oder Offsetströme eingestellt werden.

Erfindungsgemäß sind in den von den Sendern emittierten Lichtstrahlen Kodierungen enthalten. Mittels der Korrekturwerte werden Gleichspannungsanteile in den Empfangssignalen kompensiert und/oder Dekodierungsgrößen korrigiert.

Da das erwartete Empfangssignal bekannt ist, beziehungsweise eingelernt werden kann, kann anhand dessen der Gleichspannungsanteil im aktuellen Empfangssignal mittels der Korrekturwerte kompensiert werden.

Zur Dekodierung der Kodierung des Empfangssignals sind dem j eweiligen Empfänger Bauteile wie Demodulatoren zugeordnet, die zum Beispiel Pulsweitendiskriminatoren, Pulspausendiskriminatoren, Phasenlagendiskriminatoren und dergleichen aufweisen können. Auch diese Bauteile sind durch Alterungs- oder Temperatureffekte bedingt Änderungen unterworfen, die mit den Korrekturwerten kompensiert werden können.

Weiter vorteilhaft sind mit den Korrekturwerten Abtastzeitpunkte von Empfangssignalen korrigiert.

Die zur Signalabtastung der Empfangssignale der Empfänger eingesetzten Bauteile, insbesondere Elektronik-Gatter, können bestimmten Schwankungen unterworfen sein, wodurch sich bei der Abtastung der Empfangssignale Fehler ergeben können. Diese Effekte können durch Korrekturwerte in Form von Verzögerungszeiten bei der Abtastung kompensiert werden.

Weiter vorteilhaft sind mittels der Korrekturwerte Verstärkungen von Empfangssignalen korrigiert.

Dabei kann bei einer Verstärkung eines Empfangssignals über einen vorgegebenen Grenzwert hinaus ein einem Objekteingriff im Überwachungsbereich entsprechendes Ojektfeststellungssignal generiert sein.

Damit wird eine Plausibilitätsbetrachtung derart durchgeführt, dass für den Fall, dass ein Empfangssignal extrem stark verstärkt werden muss, mit hoher Sicherheit eine Strahlunterbrechung durch einen Objekteingriff vorliegen muss.

Gemäß einer weiteren vorteilhaften Ausgestaltung weist die Korrektureinheit eine Regeleinheit auf.

Insbesondere für den Fall, dass die Lichtschrankenanordnung im Bereich der Sicherheitstechnik eingesetzt wird, ist es zur Erfüllung der Sicherheitsanforderungen erforderlich, Selbsttests für die Komponenten der Lichtschrankenanordnung durchzuführen. Zur Durchführung der Selbsttests werden, insbesondere gesteuert durch die Steuer- und Auswerteeinheit Testsignale generiert, in die Signalpfade der Empfänger eingespeist, in die Steuer- und Auswerteeinheit rückgelesen und dort mit bestimmten Erwartungshaltungen verglichen, wodurch festgestellt werden kann ob diese Komponenten fehlerfrei arbeiten.

Da diese Testsignale bekannt sind, können in der Korrektureinheit deren Auswirkungen auf die Bauteile analysiert werden um dann in Abhängigkeit hiervon geeignete Korrekturwerte zu generieren, falls bei den Bauteilen durch Driften bedingte Änderungen festgestellt werden.

Generell weist die Lichtschrankenanordnung eine Messeinrichtung zur Feststellung von Eigenschaften von empfangsseitigen Bauteilen und/oder Empfangssignalen auf. Mit der Messeinrichtung generierte Messwerte sind der Korrektureinheit als Eingangsgrößen zugeführt und in Abhängigkeit dieser werden Korrekturwerte generiert.

Gemäß einer ersten Variante weist die Korrektureinheit eine Steuereinheit auf.

In diesem Fall werden abhängig von den Messwerten der Messeinrichtung mittels der Korrektureinheit Steuerungsprozesse durchgeführt, indem an die Messeinrichtung angepasste Korrekturwerte zur Stabilisierung der Arbeitspunkte der Empfänger und/oder deren zugeordneten Bauteilen vorgegeben werden.

Gemäß einer zweiten Variante weist die Korrektureinheit eine Regeleinheit auf.

In diesem Fall bilden die Messwerte der Messeinrichtung Istgrößen für die Regeleinheit oder es werden aus den Messwerten Istgrößen berechnet. Diese Istgrößen werden mit Sollwerten, die als eingelernte Größen zum Beispiel durch die Steuer- und Auswerteeinheit vorgegeben werden, in der Regeleinheit zur Durchführung von Regelprozessen verglichen.

Besonders vorteilhaft ist der Regeleinheit eine Verstärkereinheit zugeordnet. Mittels der Verstärkereinheit sind Vorsteuerwerte für die in der Regeleinheit durchgeführte Regelung zugeführt.

Dabei sind zweckmäßig die Vorsteuerwerte Einlerngrößen, die in Abhängigkeit von Stellgrößen der Regeleinheit ermittelt sind.

Durch die so ermittelten Vorsteuerwerte werden der Regeleinheit Vorabwerte für die Korrekturwerte vorgegeben, die bereits nahe an den einzuregelnden Größen liegen. Dies hat den Vorteil, dass mit der Regeleinheit nur noch kleine Genauigkeitskorrekturen durchgeführt werden müssen.

Die Erfindung wird im Folgenden anhand der Zeichnungen erläutert. Es zeigen:
- Figur 1:: Ausführungsbeispiel der erfindungsgemäßen Lichtschrankenanordnung
- Figur 2:: Erste Variante einer Empfängereinheit für die Lichtschrankenanordnung gemäß Figur 1
- Figur 3:: Zweite Variante einer Empfängereinheit für die Lichtschrankenanordnung gemäß Figur 1
- Figur 4:: Dritte Variante einer Empfängereinheit für die Lichtschrankenanordnung gemäß Figur 1

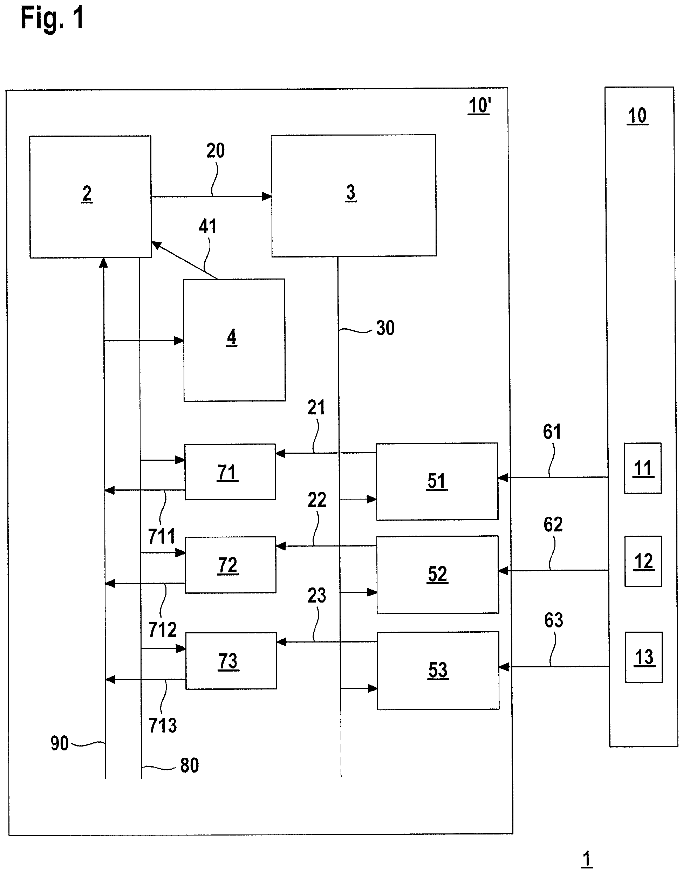

Figur 1 zeigt ein Ausführungsbeispiel der erfindungsgemäßen Lichtschrankenanordnung in Form eines Lichtvorhangs 1. Der Lichtvorhang 1 weist eine in einem Gehäuse integrierte Sendereinheit 10 und eine ebenfalls in einem Gehäuse integrierte Empfängereinheit 10' auf. Die Sendereinheit 10 und Empfängereinheit 10' sind an gegenüberliegenden Rändern eines Überwachungsbereichs, innerhalb dessen mit der Lichtschrankenanordnung Objektdetektionen erfolgen, angeordnet.

Die Sendereinheit 10 weist eine Reihenanordnung von Lichtstrahlen 61, 62, 63 emittierenden Sendern 11, 12, 13 auf, die von einer nicht dargestellten Sendersteuerung gesteuert werden. In Figur 1 sind nur drei Sender 11, 12, 13 dargestellt, wobei jedoch der Lichtvorhang 1 typisch mehr als drei Sender 11, 12, 13 aufweist. Die Sender 11, 12, 13 können beispielsweise in Form von Photodioden ausgebildet sein. Die Sender 11, 12, 13 emittieren pulsförmige, kodierte Lichtstrahlen.

Die Empfängereinheit 10' weist eine der Anzahl der Sender 11, 12, 13 entsprechende Anzahl von Empfängern 51, 52, 53 auf, die als Photodioden ausgebildet sind. Die Sender 11, 12, 13 und Empfänger 51, 52, 53 sind paarweise gegenüberliegend so angeordnet, dass bei freiem Überwachungsbereich die Lichtstrahlen eines Senders ungehindert allein auf den zugeordneten Empfänger 51, 52, 53 treffen.

Die Empfänger 51, 52, 53 werden von einer Steuer- und Auswerteeinheit 2 gesteuert, die zum Beispiel von einem Microcontroller gebildet ist. Für den Fall, dass der Lichtvorhang 1 im Bereich der Sicherheitstechnik eingesetzt wird, weist die Steuer- und Auswerteeinheit 2 einen redundanten Aufbau, beispielsweise in Form zweier sich gegenseitig überwachenden Steuer- und Auswerteeinheit 2, auf.

Die Sender 11, 12, 13 und Empfänger 51, 52, 53 des Lichtvorhangs 1 werden in bekannter Weise über die Lichtstrahlen optisch derart synchronisiert, dass die einzelnen Paare von Sendern 11, 12, 13 und Empfängern 51, 52, 53 zyklisch einzeln nacheinander oder in einer festgelegten Reihenfolge aktiviert sind.

Die Empfänger 51, 52, 53 werden über eine Adressleitung 80 einzeln aktiviert, wobei hierzu jedem Empfänger 51, 52, 53 ein Schaltelement 71, 72, 73 zugeordnet ist. Die Empfangssignale der Empfänger 51, 52, 53 werden über Leitungen 21, 22, 23 den Schaltelementen 71, 72, 73 zugeführt. Von den Schaltelementen 71, 72, 73 wird über Leitungen 711, 712, 723 das Empfangssignal des gerade ausgewählten Empfängers 51, 52, 53 über eine Signalleitung 90 der Steuer- und Auswerteeinheit 2 zugeführt.

Dementsprechend werden die Empfangssignale der einzelnen Empfänger 51, 52, 53 einzeln nacheinander der Steuer- und Auswerteeinheit 2 zugeführt und dort zur Generierung eines Ojektfeststellungssignals ausgewertet, das im vorliegenden Fall als binäres Schaltsignal ausgebildet ist. Wird beispielsweise durch eine Schwellwertbewertung der Empfangssignale festgestellt, dass keiner der Lichtstrahlen 61, 62, 63 unterbrochen ist, so wird in der Steuer- und Auswerteeinheit 2 ein Schaltsignal mit einem, einen freien Überwachungsbereich signalisierenden, Schaltzustand generiert. Ist wenigstens die Strahlachse einer der Lichtstrahlen 61, 62, 63 zumindest teilweise unterbrochen, wird ein Schaltsignal mit einem einen Objekteingriff signalisierenden Schaltzustand generiert.

In der Steuer- und Auswerteeinheit 2 integrierte Softwaremodule bilden zusammen mit einer Messeinrichtung und einer Signalquelle eine Korrektureinheit mit der allgemein eine Kompensation von Drifteffekten erfolgt.

Die Messeinrichtung erfasst als Messwerte 41 Kenngrößen der Empfänger 51, 52, 53 oder diesen zugeordneten Bauteilen wie zum Beispiel Empfangsverstärkern oder Demodulatoren zur Demodulation der entsprechend der von den Empfängern 51, 52, 53 empfangenen Lichtstrahlen kodierten Empfangssignale. Weiterhin kann mit der Messeinrichtung eine Analyse der Empfangssignale erfolgen.

Die Korrektureinheit ist im vorliegenden Fall als Steuereinheit ausgebildet, die die von der Messeinrichtung generierten Messwerte mit abgespeicherten, zum Beispiel eingelernten Sollwerten für die einzelnen Empfänger 51, 52, 53 vergleicht und abhängig davon Stellgrößen 20 für die einzelnen Empfänger 51, 52, 53 generiert, die an die Signalquelle ausgegeben werden.

Die zentrale Korrektureinheit generiert dabei individuell für die einzelnen Empfänger 51, 52, 53 einzelne Stellgrößen 20. Entsprechend der seriellen einzelnen Aktivierungen der Empfänger 51, 52, 53 während der Aktivierung eines Empfängers 51, 52, 53 werden die für diesen individuell generierten Stellgrößen 20 an die Signalquelle ausgegeben. Die Signalquelle generiert abhängig hiervon Korrekturwerte, die über die Signalleitung 30 diesem Empfänger 51, 52, 53 beziehungsweise diesen zugeordneten Bauteilen zugeführt wird, wodurch deren Betriebsart entsprechend den Korrekturwerten geändert wird um die registrierten Drifteffekte zu kompensieren. Die Signalquelle bildet dabei generell ein Einstellelement, mit dem spezifische Parameter der Empfänger 51, 52, 53 und deren zugeordneten Bauteilen eingestellt werden können.

Mit den Korrekturwerten können insbesondere die Arbeitspunkte der Empfänger 51, 52, 53 und /oder deren zugeordneten Bauteilen stabilisiert werden, beispielsweise durch eine Einstellung von Offsetspannungen oder Offsetströmen. Weiterhin können auch Verstärkungen von Empfangsverstärkern eingestellt werden.

Weiterhin können mit den Korrekturwerten auch Gleichspannungsanteile in den Empfangssignalen kompensiert werden oder Dekodiergrößen in den Demodulatoren nachgeführt werden. Schließlich können mit den Korrekturwerten auch Abtastzeitpunkte zur Abtastung der Empfangssignale korrigiert werden.

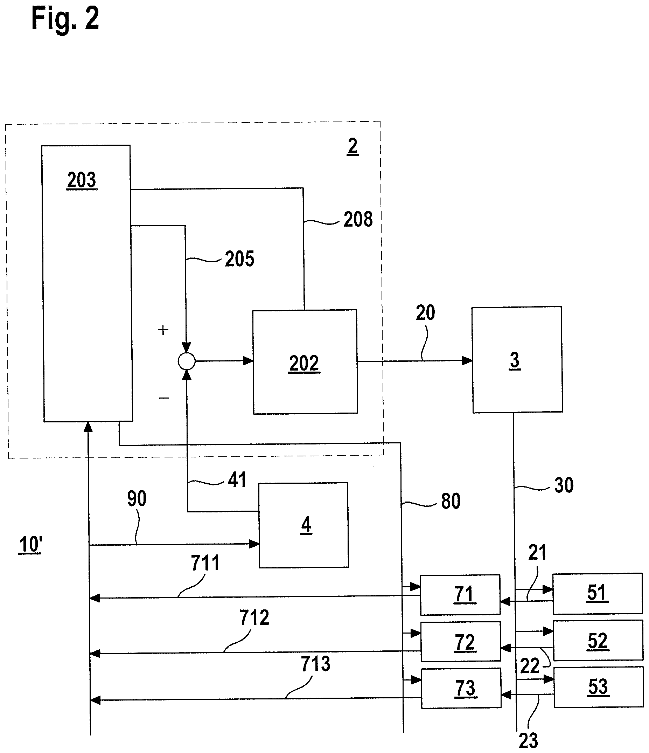

Figur 2 zeigt eine erste Variante der Empfangseinheit des Lichtvorhangs 1 gemäß Figur 1.

Die Steuer- und Auswerteeinheit 2 gemäß Figur 2 weist eine Regeleinheit 202 als integriertes Softwaremodul und eine zugeordnete Rechnereinheit 203 auf. In diesem Fall werden die Korrekturwerte der Korrektureinheit durch eine Regelung ermittelt. Die von der Messeinrichtung generierten Messwerte 41 bilden die Istwerte für die Regelungen. In der Rechnereinheit 203 sind Sollwerte abgespeichert, die über die Leitung 205 der Regeleinheit 202 zugeführt werden. Die Differenzen zwischen Sollwerten und Istwerten bilden die Regelabweichungen für die Regeleinheit 202. Weiterhin sind in der Rechnereinheit 203 individuell für alle Empfänger 51, 52, 53 Regelparameter hinterlegt, die der Regeleinheit 202 über die Leitung 208 zugeführt sind. Die in der Regeleinheit 202 erzeugten Stellgrößen 20 werden dann analog zur Ausführungsform gemäß Figur 1 der Signalquelle zugeführt, welche mit dem Korrekturwert für die Einstellung der einzelnen Empfänger 51, 52, 53 sorgt.

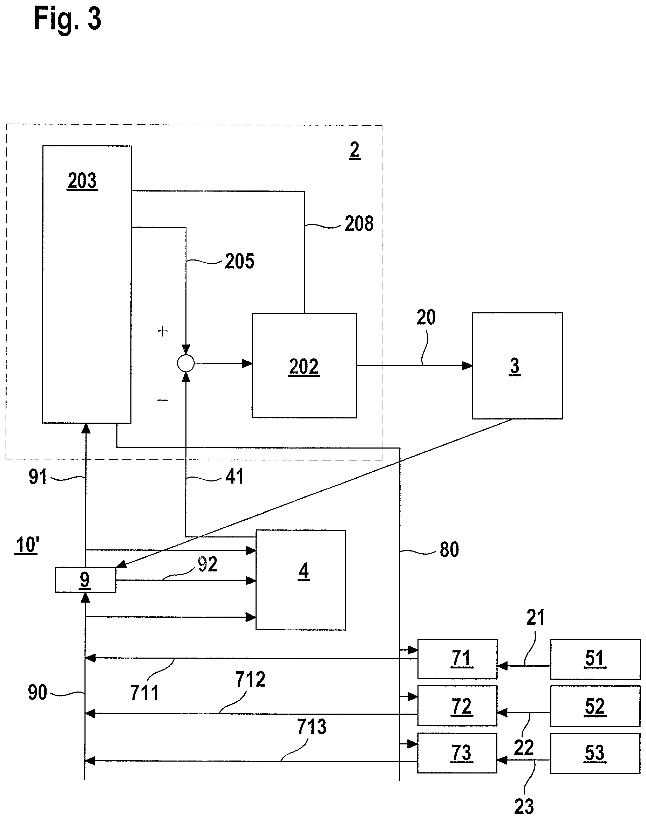

Figur 3 zeigt eine zweite Variante der Empfängereinheit 10' des Lichtvorhangs 1 gemäß Figur 1.

Die Empfängereinheit 10` gemäß Figur 3 unterscheidet sich von der Ausführungsform gemäß Figur 2 dadurch, dass den Empfängern 51, 52, 53 eine gemeinsame Verstärkereinheit 9 zugeordnet ist. Anstelle einer gemeinsamen Verstärkereinheit 9 kann auch eine gemeinsame Dekodiereinheit zur Dekodierung der Empfangssignale vorgesehen sein. Die Empfangssignale der Empfänger 51, 52, 53 werden über die Leitungen 711, 712, 713 und die gemeinsame Signalleitung 90 der Verstärkereinheit 9 zugeführt. Vom Ausgang der Verstärkereinheit 9 führt eine Signalleitung 91 zur Steuer- und Auswerteeinheit 2. Eine weitere Signalleitung 92 führt von der Verstärkereinheit 9 zur Messeinrichtung, sodass mit der Messeinrichtung auch Messwerte 41 von der Verstärkereinheit 9 generiert werden.

Die in der Regeleinheit 202 generierten Stellgrößen 20 werden analog zur Ausführungsform gemäß Figur 2 der Signalquelle zur Generierung der Korrekturwerte zugeführt. Im Unterschied zur Ausführungsform gemäß Figur 2 steuert bei dem Ausführungsbeispiel gemäß Figur 3 die Signalquelle jedoch nicht die Empfänger 51, 52, 53 an, sondern über die Signalleitung 30 die Verstärkereinheit 9.

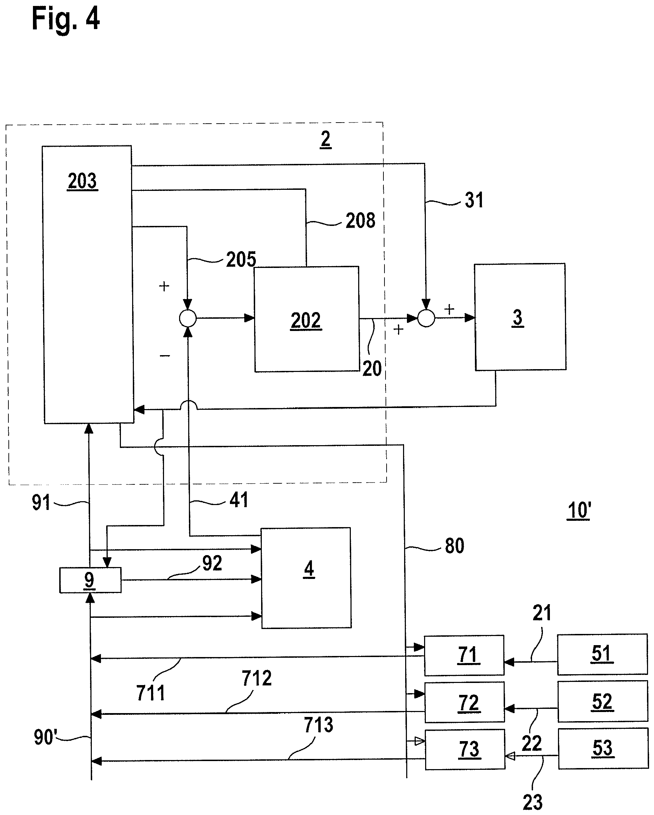

Figur 4 zeigt eine dritte Variante der Empfängereinheit 10` des Lichtvorhangs 1 gemäß Figur 1.

Die Ausführungsform gemäß Figur 4 unterscheidet sich von der Ausführungsform gemäß Figur 3 nur dadurch, dass der Regeleinheit 202 eine Verstärkereinheit zugeordnet ist. Diese Verstärkereinheit wird dadurch gebildet, dass die in der Signalquelle generierten Korrekturwerte in die Steuer- und Auswerteeinheit 2 rückgelesen werden. Anhand dieser rückgelesenen Werte werden in der Steuer- und Auswerteeinheit 2 Vorsteuerwerte generiert, die der Regeleinheit 202 über die Leitung 31 zugeführt werden. Damit müssen in der Regeleinheit 202 nur noch kleine Regelkorrekturen durchgeführt werden.

### Bezugszeichenliste

- (1): Lichtvorhang
- (2): Steuer- und Auswerteeinheit
- (9): Verstärkereinheit
- (10): Sendereinheit
- (10`): Empfängereinheit
- (11): Sender
- (12): Sender
- (13): Sender
- (20): Stellgröße
- (21): Leitung
- (22): Leitung
- (23): Leitung
- (30): Signalleitung
- (31): Leitung
- (41): Messwert
- (51): Empfänger
- (52): Empfänger
- (53): Empfänger
- (61): Lichtsender
- (62): Lichtsender
- (63): Lichtsender
- (71): Schaltelement
- (72): Schaltelement
- (73): Schaltelement
- (80): Adressleitung
- (90): Signalleitung
- (91): Signalleitung
- (92): Signalleitung
- (202): Regeleinheit
- (203): Rechnereinheit
- (205): Leitung
- (208): Leitung
- (711): Leitung
- (712): Leitung
- (713): Leitung

## Patentansprüche

1. Lichtschrankenanordnung zur Erfassung von Objekten in einem Überwachungsbereich, mit einer Mehrfachanordnung von Lichtstrahlen emittierenden Sendern (11, 12, 13) und Lichtstrahlen empfangenden Empfängern (51, 52, 53), wobei bei freiem Überwachungsbereich von Sendern (11, 12, 13) emittierte Lichtstrahlen ungehindert auf diesen zugeordnete Empfänger (51, 52, 53) geführt sind, wobei durch einen Objekteingriff im Überwachungsbereich die Lichtstrahlen wenigstens eines Senders zumindest teilweise unterbrochen sind, und mit einer Steuer- und Auswerteeinheit (2), welche ausgebildet ist, in Abhängigkeit von Empfangssignalen der Empfänger (51, 52, 53) ein Ojektfeststellungssignal zu generieren, und wobei eine Korrektureinheit vorgesehen ist, mittels derer zur Kompensation von Drifteffekten individuell für die einzelnen Empfänger (51, 52, 53) und/oder diesen zugeordneten Bauteilen Korrekturwerte generiert sind, wobei die von den Sendern (11, 12, 13) emittierten Lichtstrahlen Kodierungen enthalten, und wobei mittels der Korrekturwerte Gleichspannungsanteile in den Empfangssignalen kompensiert sind,
**dadurch gekennzeichnet, dass** mittels der Korrekturwerte Dekodierungsgrößen korrigiert sind.

2. Lichtschrankenanordnung nach Anspruch 1, **dadurch gekennzeichnet, dass** die Empfänger (51, 52, 53) zyklisch einzeln nacheinander aktiviert sind und dass während der Aktivierung eines Empfängers (51, 52, 53) dessen Betrieb mittels der Korrekturwerte beeinflusst ist.

3. Lichtschrankenanordnung nach einem der Ansprüche 1 oder 2, **dadurch gekennzeichnet, dass** mittels der Korrekturwerte eine Stabilisierung der Arbeitspunkte des jeweiligen Empfängers (51, 52, 53) und/oder diesen zugeordneten Bauteilen bewirkt ist.

4. Lichtschrankenanordnung nach einem der Ansprüche 1 bis 3, **dadurch gekennzeichnet, dass** mit den Korrekturwerten Abtastzeitpunkte von Empfangssignalen korrigiert sind.

5. Lichtschrankenanordnung nach einem der Ansprüche 1 bis 4, **dadurch gekennzeichnet, dass** mittels der Korrekturwerte Verstärkungen von Empfangssignalen korrigiert sind.

6. Lichtschrankenanordnung nach Anspruch 5, **dadurch gekennzeichnet, dass** bei einer Verstärkung eines Empfangssignals über einen vorgegebenen Grenzwert hinaus ein einem Objekteingriff im Überwachungsbereich entsprechendes Ojektfeststellungssignal generiert ist.

7. Lichtschrankenanordnung nach einem der Ansprüche 1 bis 6, **dadurch gekennzeichnet, dass** Korrekturwerte in Abhängigkeit von Testsignalen für einen Selbsttest der Lichtschrankenanordnung generiert sind.

8. Lichtschrankenanordnung nach einem der Ansprüche 1 bis 7, **dadurch gekennzeichnet, dass** diese eine Messeinrichtung zur Feststellung von Eigenschaften von empfangsseitigen Bauteilen und/oder Empfangssignalen aufweist, wobei mit der Messeinrichtung generierte Messwerte (41) der Korrektureinheit als Eingangsgrößen zugeführt sind und in Abhängigkeit dieser Korrekturwerte generiert sind.

9. Lichtschrankenanordnung nach einem der Ansprüche 1 bis 8, **dadurch gekennzeichnet, dass** die Korrektureinheit eine Steuereinheit aufweist.

10. Lichtschrankenanordnung nach einem der Ansprüche 1 bis 9, **dadurch gekennzeichnet, dass** die Korrektureinheit eine Regeleinheit (202) aufweist.

11. Lichtschrankenanordnung nach einem der Ansprüche 8 bis 10, **dadurch gekennzeichnet, dass** die Korrektureinheit zur Generierung der Korrekturwerte eine Signalquelle aufweist, wobei hierzu der Signalquelle in der Regeleinheit (202) oder Steuereinheit generierte Stellgrößen (20) zugeführt sind.

12. Lichtschrankenanordnung nach einem der Ansprüche 10 oder 11, **dadurch gekennzeichnet, dass** der Regeleinheit (202) eine Verstärkereinheit zugeordnet ist, wobei mittels der Verstärkereinheit Vorsteuerwerte für die in der Regeleinheit (202) durchgeführte Regelung zugeführt sind.

13. Lichtschrankenanordnung nach Anspruch 12, **dadurch gekennzeichnet, dass** die Vorsteuerwerte Einlerngrößen sind, die in Abhängigkeit von Stellgrößen (20) der Regeleinheit (202) ermittelt sind.

14. Lichtschrankenanordnung nach einem der Ansprüche 1 bis 13, **dadurch gekennzeichnet, dass** diese ein Lichtvorhang (1) ist.

## Claims

1. An optical barrier device for detecting objects in a monitoring region, having a multiple arrangement of transmitters (11, 12, 13) emitting light beams and receivers (51, 52, 53) receiving light beams, wherein, when the monitoring region is free, light beams emitted by transmitters (11, 12, 13) are guided unhindered to receivers (51, 52, 53) associated therewith, wherein the light beams of at least one transmitter are at least partially interrupted by an object engagement in the monitoring region, and having a control and evaluation unit (2) which is designed to generate an object detection signal as a function of received signals from the receivers (51, 52, 53), and wherein a correction unit is provided by means of which correction values are generated individually for the individual receivers (51, 52, 53) and/or components assigned thereto in order to compensate for drift effects,
the light beams emitted by the transmitters (11, 12, 13) containing coding, and
wherein DC voltage components in the received signals are compensated for by means of the correction values,
**characterised in that** decoding variables are corrected by means of the correction values.

2. The optical barrier device according to claim 1, **characterised in that** the receivers (51, 52, 53) are cyclically activated individually one after the other and that during the activation of a receiver (51, 52, 53) its operation is influenced by means of the correction values.

3. The optical barrier device according to one of claims 1 or 2, **characterised in that** a stabilisation of the operating points of the respective receiver (51, 52, 53) and/or components associated therewith is effected by means of the correction values.

4. The optical barrier device according to one of claims 1 to 3, **characterised in that** the correction values are used to correct the sampling times of received signals.

5. The optical barrier device according to one of claims 1 to 4, **characterised in that** the correction values are used to correct amplifications of received signals.

6. The optical barrier device according to claim 5, **characterised in that** in the event of an amplification of a received signal beyond a predetermined limit value, an object detection signal corresponding to an object intervention in the monitoring area is generated.

7. The optical barrier device according to one of claims 1 to 6, **characterised in that** correction values are generated in dependence on test signals for a self-test of the optical barrier device.

8. The optical barrier device according to one of claims 1 to 7, **characterised in that** it has a measuring device for determining properties of components on the receiving side and/ or received signals, measured values (41) generated with the measuring device being fed to the correction unit as input variables and correction values being generated as a function of these.

9. The optical barrier device according to one of claims 1 to 8, **characterised in that** the correction unit comprises a control unit.

10. The optical barrier device according to one of claims 1 to 9, **characterised in that** the correction unit has a control unit (202).

11. The optical barrier device according to one of claims 8 to 10, **characterised in that** the correction unit has a signal source for generating the correction values, wherein control variables (20) generated in the control unit (202) or control unit are supplied to the signal source for this purpose.

12. The optical barrier device according to one of claims 10 or 11, **characterised in that** an amplifier unit is associated with the control unit (202), wherein pre-control values for the control carried out in the control unit (202) are supplied by means of the amplifier unit.

13. The optical barrier device according to claim 12, **characterised in that** the pre-control values are teach-in variables which are determined as a function of manipulated variables (20) of the control unit (202).

14. The optical barrier device according to one of claims 1 to 13, **characterised in that** it is a light curtain (1).

## Revendications

1. Système de barrière lumineuse pour la détection d'objets dans une zone de surveillance, comportant un agencement multiple d'émetteurs (11, 12, 13) émettant des faisceaux lumineux et de récepteurs (51, 52, 53) recevant des faisceaux lumineux, dans lequel, lorsque la zone de surveillance est libre, les faisceaux lumineux émis par les émetteurs (11, 12, 13) sont guidés sans entrave vers les récepteurs (51, 52, 53) qui leur sont associés, dans lequel les faisceaux lumineux d'au moins un émetteur sont au moins partiellement interrompus par l'engagement d'un objet dans la zone de surveillance, et ayant une unité de commande et d'évaluation (2) qui est conçue pour générer un signal de détection d'objet en fonction des signaux reçus des récepteurs (51, 52, 53), et dans laquelle une unité de correction est prévue au moyen de laquelle des valeurs de correction sont générées individuellement pour les récepteurs individuels (51, 52, 53) et/ou les composants qui leur sont affectés afin de compenser les effets de la dérive,
les faisceaux lumineux émis par les émetteurs (11, 12, 13) contenant un codage, et
dans lequel les composantes de tension continue des signaux reçus sont compensées au moyen des valeurs de correction,
**caractérisé par le fait que** les variables de décodage sont corrigées au moyen des valeurs de correction.

2. Système de barrière lumineuse selon la revendication 1, **caractérisé en ce que** les récepteurs (51, 52, 53) sont activés cycliquement individuellement l'un après l'autre et qu'au cours de l'activation d'un récepteur (51, 52, 53) son fonctionnement est influencé au moyen des valeurs de correction.

3. Système de barrière lumineuse selon l'une des revendications 1 ou 2, **caractérisé par le fait qu'**une stabilisation des points de fonctionnement du récepteur respectif (51, 52, 53) et/ou des composants associés est effectuée au moyen des valeurs de correction.

4. Système de barrière lumineuse selon l'une des revendications 1 à 3, **caractérisé en ce que** les valeurs de correction sont utilisées pour corriger les temps d'échantillonnage des signaux reçus.

5. Système de barrière lumineuse selon l'une des revendications 1 à 4, **caractérisé en ce que** les valeurs de correction sont utilisées pour corriger les amplifications des signaux reçus.

6. Système de barrière lumineuse selon la revendication 5, **caractérisé en ce qu'**en cas d'amplification d'un signal reçu au-delà d'une valeur limite prédéterminée, un signal de détection d'objet correspondant à une intervention d'un objet dans la zone de surveillance est généré.

7. Système de barrière lumineuse selon l'une des revendications 1 à 6, **caractérisé en ce que** les valeurs de correction sont générées en fonction de signaux de test pour un autotest du système de barrière lumineuse.

8. Système de barrière lumineuse selon l'une des revendications 1 à 7, **caractérisé en ce qu'**il possède un dispositif de mesure pour déterminer les propriétés des composants du côté récepteur et/ou des signaux reçus, les valeurs mesurées (41) générées par le dispositif de mesure étant transmises à l'unité de correction en tant que variables d'entrée et les valeurs de correction étant générées en fonction de ces dernières.

9. Système de barrière lumineuse selon l'une des revendications 1 à 8, **caractérisé par le fait que** l'unité de correction comprend une unité de commande.

10. Système de barrière lumineuse selon l'une des revendications 1 à 9, **caractérisé par le fait que** l'unité de correction comporte une unité de commande (202).

11. Système de barrière lumineuse selon l'une des revendications 8 à 10, **caractérisé en ce que** l'unité de correction a une source de signal pour générer les valeurs de correction, dans lequel les variables de contrôle (20) générées dans l'unité de contrôle (202) ou l'unité de commande sont fournies à la source de signal à cette fin.

12. Système de barrière lumineuse selon l'une des revendications 10 ou 11, **caractérisé en ce qu'**une unité d'amplification est associée à l'unité de commande (202), les valeurs de pré-contrôle pour le contrôle effectué dans l'unité de commande (202) étant fournies au moyen de l'unité d'amplification.

13. Système de barrière lumineuse selon la revendication 12, **caractérisé en ce que** les valeurs de précontrôle sont des variables d'apprentissage qui sont déterminées en fonction des variables manipulées (20) de l'unité de commande (202).

14. Système de barrière lumineuse selon l'une des revendications 1 à 13, **caractérisé en ce qu'**il s'agit d'un rideau de lumière (1).
